# EUROPÄISCHE PATENTSCHRIFT

(11) **EP 3 744 482 B1**
(45) Veröffentlichungstag und Bekanntmachung des Hinweises auf die Patenterteilung: **29.12.2021**
(21) Anmeldenummer: 19176696.3
(22) Anmeldetag: 27.05.2019
(51) Int. Cl.: B25J 9/16

(54) **ABSICHERN EINES BEWEGLICHEN MASCHINENTEILS**
SECURING OF A MOVABLE PART OF A MACHINE
FIXATION D'UNE PIÈCE DE MACHINE MOBILE

(43) Veröffentlichungstag der Anmeldung: 02.12.2020
(73) Patentinhaber: SICK AG, 79183 Waldkirch (DE)
(72) Erfinder: Steinkemper, Heiko, 79183 Waldkirch (DE); Hofmann, Christoph, 79183 Waldkirch (DE); Ramachandra, Sanketh, 79183 Waldkirch (DE)

(56) Entgegenhaltungen:
- WO-A1-2019/042784
- DE-A1-102005 003 827
- DE-A1-102015 112 656
- DE-A1-102016 125 595
- DE-A1-102017 101 905

## Beschreibung

Die Erfindung betrifft ein Verfahren zum Absichern eines beweglichen Maschinenteils und ein Absicherungssystem für eine Maschine nach dem Oberbegriff von Anspruch 1 beziehungsweise 13.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

In der sicherheitstechnischen Überwachung von Robotern, speziell Leichtbaurobotern, besteht ein zunehmender Wunsch nach engerer Zusammenarbeit mit Personen (MRK, Mensch-Roboter-Kollaboration) auch in komplexen Umgebungen. Relevante Normen in diesem Zusammenhang sind beispielsweise die ISO 10218 für Industrieroboter oder die ISO 15066 für kollaborierende Roboter. Für solche kooperativen Anwendungen sind bisherige Sicherheitskonzepte durch Zäune und Absperrungen untauglich. Aber auch die Absicherung durch herkömmliche Sicherheitssensoren, wie Laserscanner, Lichtgitter oder Sicherheitskameras, eignet sich vorrangig für große, freie Überwachungsbereiche mit einfacher Geometrie. Ähnliche Problemstellungen ergeben sich für andere Maschinen als Roboter, beispielsweise AGVs/AGCs (Automated Guided Vehicle / Container) oder Drohnen.

Bei Robotern besteht ein Ansatz darin, die Kraft so zu begrenzen, dass auch eine Kollision nicht zu ernsthaften Verletzungen führen kann. Zudem wird beim Design der mechanischen Roboterkomponenten bewusst auf kantenfreie, runde oder weiche Außenkonturen geachtet. Dabei bleiben jedoch Gefahrenquellen am Werkzeug selbst, das spitze, rotierende oder heiße Teile aufweisen kann. Außerdem verhindern die mechanischen Maßnahmen und Kraftbegrenzungen Quetschungen etwa der Hand zwischen Werkzeug und einer Halterung oder dergleichen auf einer Arbeitsfläche nicht zuverlässig.

Hier besteht nun grundsätzlich die Möglichkeit, einen kleinen, leichten Distanzsensor beziehungsweise eine Mehrfachanordnung solcher Distanzsensoren mit dem Werkzeug am Roboterarm mitzubewegen. Mit einem entsprechenden Distanzsensor befasst sich die DE 10 2015 112 656 A1. Damit wird eine Art virtueller Schutzmantel um das Werkzeug überwacht und der Roboter bei Eindringen eines sicherheitsrelevanten Objekts gebremst oder angehalten. Der Distanzsensor ist, jedenfalls im Verbund mit der übergeordneten Steuerung, sicher ausgelegt, und zum Erreichen eines höheren Sicherheitsniveaus sind Tests in Form einer Referenzfahrt bei bekannten Referenzzielen möglich.

Ein Vorteil einer derartigen Absicherung am Roboterarm ist die Verwendung bei verschiedenen Standardwerkzeugen bei nur einmaliger Investition in eine MRK-Anwendung, womit also auf die Anschaffung mehrerer teurer MRK-Überwachungsvorrichtungen verzichtet werden kann. Diese Stärke der flexiblen Einsetzbarkeit wird aber bisher dadurch beschränkt, dass jede spezifische Anwendung und jeder spezifische Prozessablauf bei der Inbetriebnahme eingelernt werden muss. Variationen im Prozess, wie etwa das Greifen verschiedener Werkstücke beziehungsweise das Greifen aus unterschiedlichen Behältern, können deshalb nur abgesichert werden, wenn von Anfang an klar definiert ist, zu welchem Zeitpunkt und an welcher Position im Prozess eine Anpassung des Schutzmantels erforderlich ist, die dann fest eingelernt wird. Außerdem sind die Möglichkeiten der Anpassung für den Schutzmantel selbst sehr begrenzt. Eine situative, flexible sicherheitsgerichtete Reaktion auf Prozess- oder Umgebungsänderungen oder andere Aktoren ist noch nicht möglich.

In der noch unveröffentlichten deutschen Patentanmeldung mit dem Aktenzeichen 102019110882 wird ein Verfahren vorgeschlagen, wie ein Absicherungssystem mit Distanzsensoren für einen Roboterarm in einer Anwendung parametriert und eingelernt wird. Das Einlernen erfolgt einmalig vor Inbetriebnahme der Applikation, und die Absicherung ist dann im Betrieb nicht mehr flexibel.

Die noch unveröffentlichte deutsche Patentanmeldung mit dem Aktenzeichen 102018113362 befasst sich mit der Integration eines Kameramoduls in ein Absicherungssystem. Die Kamera erfüllt hier Vision-, Automatisierungs- oder Visualisierungsaufgaben, erweitert folglich die eigentliche Absicherung nicht.

Aus der EP 1 635 107 A1 ist eine dynamische Schutzfeldanpassung bekannt, wobei die dafür erforderlichen Parameter von der Maschinensteuerung der überwachten Maschine übergeben werden. Die DE 10 2005 011 143 A1 verändert in einer ähnlichen Überwachung die Kontur ihres Sicherheitsbereichs in Abhängigkeit von Bewegungs-, Positions- und/oder Betriebsdaten der überwachten Maschine oder von an die Maschine übermittelten Steuerungsdaten. Dabei ist aber jeweils eine von extern beobachtende Kamera als Sicherheitssensor eingesetzt, die eine enge Kooperation nicht zulässt, sondern relativ großzügig bemessene Schutzfelder mit entsprechenden Sicherheitsabständen zwischen Mensch und Maschine erfordert.

Die DE 10 2004 038 906 B4 offenbart eine berührungslos wirkende Schutzvorrichtung, wobei ein eindringendes Objekt mittels RFID oder Barcode identifiziert wird. Die Schutzvorrichtung wird dann mit den zu dem Objekt gehörenden geometrischen Daten konfiguriert. Dadurch kann die Schutzvorrichtung für ein im Schutzfeld zulässiges Objekt in einem Teilbereich mit der richtigen Geometrie stummgeschaltet werden (Muting).

Die DE 10 2005 003 254 B4 betrifft eine Absicherung einer Presse, bei der Licht längs der Kante des Oberwerkzeugs ausgesandt und an der anderen Seite mit einer Kamera aufgezeichnet wird. Somit wird ein Schattenriss erzeugt, in dem unzulässige Objekte erfassbar sind. Die Konfiguration mit geänderten Betriebsparametern erfolgt dadurch, dass ein optischer Code mit entsprechenden Parameterinformationen in den Sichtbereich der Kamera gehalten wird.

Aus der DE 10 2016 125 595 A1 ist ein Zugangsabsicherungssystem bekannt, bei dem zwei Laserscanner an den beiden Seiten des Zugangs montiert sind, deren Schutzfelder sich berühren und so den Zugang überdecken. Jeder Laserscanner überwacht zusätzlich Detektionsfelder, deren Verletzung keine Absicherung auslöst, sondern die gleichsam als Fühler fungieren. Je nachdem, ob ein Objekt in einem Detektionsfeld erfasst wird, und in welchen Detektionsfeldern es erfasst wird, werden die Schutzfelder verkleinert oder in ihrer Form angepasst, um ein zulässiges Objekt ohne Verletzung der Schutzfelder passieren zu lassen.

Vor diesem Hintergrund ist Aufgabe der Erfindung, die Absicherung einer Maschine in enger Mensch-Maschine-Kooperation zu verbessern.

Diese Aufgabe wird durch ein Verfahren zum Absichern eines beweglichen Maschinenteils und ein Absicherungssystem für eine Maschine nach Anspruch 1 beziehungsweise 13 gelöst. Die Maschine ist insbesondere ein Roboter oder Roboterarm mit einem Werkzeug, das vornehmlich abzusichern ist (EOAS, End-of-Arm-Safeguarding). Dieses Anwendungsbeispiel eines Roboters wird im Folgenden vielfach stellvertretend verwendet, die Erläuterungen sind jeweils analog auf ein anderes bewegliches Maschinenteil zu übertragen. Die Absicherung erfolgt durch Überwachung eines virtuellen Schutzmantels um zumindest einen Teil des beweglichen Maschinenteils auf Eingriffe durch Objekte, die dann zu einer sicherheitsgerichteten Reaktion der Maschine führen. Dabei muss nicht jedes eingreifende Objekt sofort die sicherheitsgerichtete Reaktion auslösen, beispielsweise können kleine Objekte oder ganz kurze Eingriffe toleriert werden.

Der Schutzmantel wird von den Messstrahlen mindestens eines mit dem Maschinenteil mitbewegten berührungslosen Distanzsensors erzeugt, der insbesondere an dem Maschinenteil in der Nähe oder Umgebung eines Werkzeugs angebracht und vorzugsweise ein optoelektronischer Distanzsensor ist. Um mehrere Messstrahlen mit jeweiliger Messung von Abstandswerten zu erhalten, sind mehrere Distanzsensoren vorgesehen und/oder ein Distanzsensor weist mehrere Messstrahlen auf. Die Geometrie des Schutzmantels setzt sich aus den Messstrahlen und somit deren Lage im Raum zusammen. Diese Lage wird hier über Ursprung und Ausrichtung des jeweiligen Messstrahls definiert, was wiederum durch Position und Orientierung des mindestens einen Distanzsensors bestimmt ist. Die Länge des Schutzmantels lässt sich durch gemeinsame oder individuelle Abstandsschwellen der Messstrahlen einstellen.

Die Erfindung geht von dem Grundgedanken aus, den Schutzmantel durch Veränderung der Lage der Messstrahlen im Raum anzupassen. Dazu können Ursprung und/oder Ausrichtung von einem, mehreren oder allen Messstrahlen verändert werden. Gemeint ist der effektive Ursprung der schützenden Messstrahlen, beispielsweise auch nach Spiegelung an einem insbesondere beweglichen Spiegelelement wie einem MEMS-Spiegel. Bezugssystem ist dabei das bewegliche Maschinenteil, die ständigen Änderungen der Lage der Messstrahlen zur Umgebung aufgrund der Bewegung des Maschinenteils und des mitbewegten Distanzsensors sind keine Anpassung des

Schutzmantels. Hier und im Folgenden wird öfter ein mitbewegtes Bezugssystem verwendet, dessen Z-Achse im Wesentlichen der Richtung der Messstrahlen entspricht. Da die Messstrahlen nicht notwendig parallel zueinander verlaufen, wird eine gemeinsame Z-Achse beispielsweise als Mittelachse der Messstrahlen definiert. Die erfindungsgemäßen Anpassungen der Messstrahlen betreffen die lateralen Richtungen quer zu der Z-Achse, also eine Veränderung in X- oder Y-Richtung mit zu der Z-Achse senkrechten X- und Y-Achsen. Der Schutzmantel wird dadurch zumindest lokal breiter oder enger.

Die Erfindung hat den Vorteil, dass die Absicherung intelligenter und flexibler werden kann. Es gibt somit noch mehr Einsatzmöglichkeiten. Das Eingreifen eines Werkers bei Veränderungen der Anwendung oder in der Anwendung beziehungsweise der Umgebung oder dem Prozess ist nicht erforderlich, die Anpassung erfolgt automatisch, selbst wenn nicht im Vorfeld bekannt ist, zu welchem Zeitpunkt oder an welchem Ort welche Anpassung notwendig ist. Der manuelle Integrationsaufwand wird minimiert und zugleich Sicherheit und Verfügbarkeit maximiert. So wird die Produktivität gesteigert, und die Sicherheitsfunktion bleibt stets gewährleistet.

Der Schutzmantel weist vorzugsweise die Geometrie eines Zylinders, Kegelstumpfes, Prismas oder Pyramidenstumpfes auf. Die jeweils als Stumpf ausgebildeten Geometrien haben den Vorteil, dass sich der Schutzmantel aufweitet und somit nicht auf die Dimensionen der Anordnung der Distanzsensoren festgelegt ist. Die Spitze dieser Körper ist deshalb abgeschnitten, weil dort das Maschinenteil oder der stumpfe und ungefährliche hintere Teil von dessen Werkzeug angeordnet ist. Die Deckfläche an der abgeschnittenen Spitze wird von den Ursprüngen der Messstrahlen umrandet, und zwar kreisförmig im Falle eines Kegelstumpfes und mit einem regelmäßigen oder unregelmäßigen Vieleck bei einem Pyramidenstumpf.

Vorzugsweise wird der Öffnungswinkel und/oder der Durchmesser des Schutzmantels verändert. Dadurch wird der Schutzmantel in der lateralen Richtung, die oben als X-Y-Richtung definiert wurde, größer oder kleiner. Werden dabei die Ursprünge verschoben, so verändert sich der Durchmesser des Schutzmantels in einer radialen Streckung. Eine Änderung des Öffnungswinkels dehnt oder staucht den Schutzmantel im Bereich der Ursprünge noch nicht, sondern erst linear zunehmend zum fernen Rand hin.

Der Schutzmantel wird bevorzugt aus mehreren Sektoren je eines von mehreren Distanzsensoren mit einer Reihe von Messstrahlen aufgespannt. Der einzelne Distanzsensor erzeugt also mit nebeneinanderliegenden Messstrahlen eine Fläche, die den Sektor bildet. Dazu ist beispielsweise ein optoelektronischer Distanzsensor mit einer Empfängerzeile geeignet. Die Messstrahlen eines einzelnen Distanzsensors können parallel zueinander liegen oder auseinanderlaufen, dementsprechend wird der Sektor dann rechteckig oder dreieckig.

Die Anpassung des Schutzmantels erfolgt in einer ersten Alternative des Anspruchs 1 dadurch, dass andere Messstrahlen aktiviert werden, insbesondere durch Wahl eines interessierenden Bereichs des Distanzsensors. Die Distanzsensoren können in dieser Ausführungsform mehr Messstrahlen erzeugen als für einen Schutzmantel benötigt. Eine andere Auswahl der aktiven Messstrahlen ändert damit die Geometrie des Schutzmantels. Bei einem optoelektronischen Distanzsensor mit einer Vielzahl von entfernungsmessenden Lichtempfangselementen, etwa mit einer TOF-Zeile oder TOF-Matrix (Time of Flight, Lichtlaufzeitverfahren), können dazu interessierende Bereiche (ROI, Region of Interest) definiert und verändert werden.

Die Ursprünge der Messstrahlen bilden bevorzugt mindestens zwei partielle oder vollständige Ringe oder Vielecke, die selektiv aktiviert werden. Solche Ringe oder Vielecke bilden vorzugsweise, aber nicht notwendig eine geschlossene Linie. Es sind auch Halbkreise oder andere Segmente vorstellbar, etwa wenn nur die Bewegung der Maschine in einer bestimmten, bekannten Richtung abgesichert werden soll. In einer Anordnung der Messstrahlen mit zwei vollständigen oder teilweisen Ringen oder Vielecken sind gleichsam zwei oder noch mehr Schutzmäntel ineinander verschachtelt. Bei einer Ringanordnung sind die Schutzmäntel kegelstumpfförmig oder zylindrisch, bei einem Vieleck entsprechend pyramidenstumpfförmig oder prismatisch. Je nach Bedarf wird ein weiter innen oder weiter außen liegender und damit kleinerer oder größerer Schutzmantel aktiviert. Es ist auch denkbar, mehrere der Schutzmäntel zugleich zu verwenden, wobei dann insbesondere der äußere Schutzmantel als Warnfeld mit einer schwächeren Sicherheitsmaßnahme wie einem Alarm oder einer gewissen Geschwindigkeitsreduktion und erst der innere Schutzmantel als Schutzfeld mit einer echten Absicherung durch Anhalten, Ausweichen oder starke Geschwindigkeitsreduktion fungieren kann.

Die Anpassung des Schutzmantels erfolgt in einer zweiten Alternative des Anspruchs 1 durch Bewegen oder Schwenken des Distanzsensors. Diese Anpassung wird durch physische Bewegung und Einwirken eines Motors oder sonstigen Aktors bewirkt. Eine Bewegung verschiebt den Ursprung mindestens eines Messstrahls, sei es durch bewegliche Elemente in einem Distanzsensor oder einen insgesamt beweglichen Distanzsensor. Durch Schwenken wird die Ausrichtung verändert. Dabei kann auch ein Spiegelelement verschwenkt oder bewegt werden, insbesondere ein MEMS-Spiegel. Insbesondere werden dabei alle Messstrahlen nach innen oder außen geneigt und verkleinern oder vergrößern auf diese Weise den Öffnungswinkel des Schutzmantels. Es sei nochmals daran erinnert, dass Bewegen und Schwenken jeweils in einem mit dem Maschinenteil mitbewegten Bezugssystem gemeint ist.

Der Schutzmantel wird bevorzugt zumindest in Teilbereichen durch Veränderung der Abstandsschwellen angepasst. Das ist eine Anpassung des Schutzmantels in einer weiteren Dimension, nämlich der Z-Richtung im oben definierten mitbewegten Koordinatensystem. Anschaulich wird der Schutzmantel länger oder kürzer, nicht breiter oder schmaler, wobei das auch miteinander kombinierbar ist. Eine globale Anpassung aller Abstandsschwellen erfolgt beispielsweise in Abhängigkeit von der Bewegungsgeschwindigkeit des Maschinenteils oder der Gefahr, die von einem bestimmten Werkzeug ausgeht. Werden die Abstandsschwellen nicht gemeinsam in gleicher Weise verändert, so ist auch eine Anpassung an eine bestimmte Z-Kontur möglich, etwa für ein neues zu bearbeitendes oder zu greifendes Werkstück.

Vorzugsweise wird mit mindestens einem weiteren Sensor eine Eigenschaft des beweglichen Maschinenteils, eines Werkzeugs am Maschinenteil oder eines mitgeführten oder bearbeiteten Werkstücks oder dessen Umgebung erfasst, wobei der Schutzmantel anhand der erfassten Eigenschaft angepasst wird. Dabei kann ein Werkstück eng als ein eigentliches Werkstück aufgefasst werden, aber auch insbesondere im Zusammenhang mit der Erfassung von dessen Umgebung breiter verstanden werden und beispielsweise eine Arbeitsposition, einen Werkzeugträger oder Werkstückhalter, einen Behälter mit zu greifenden Objekten und dergleichen mit umfassen. Der weitere Sensor kann ein bereits für die Maschine vorhandener Sensor sein, der aber primär andere Aufgaben erfüllt und nun für das Absicherungssystem mitgenutzt wird.

Der weitere Sensor liefert über die Eigenschaft die Information, wie die Anpassung des Schutzmantels erfolgen soll. Das sind beispielsweise Prozesszustände, Prozessvariationen, Abmessungen von Werkzeug und/oder Werkstück, eine Position des Maschinenteils, insbesondere Erreichen eines Umschaltpunkts, oder eine Geschwindigkeit des Maschinenteils. Zur Anpassung können feste Werte für den angepassten Schutzmantel oder Rechenvorschriften zu deren Gewinnung in einer Datenbank abgelegt sein, auf die lokal oder auch beispielsweise per Cloud zugegriffen wird. Der weitere Sensor ist intern oder extern und kann an der Maschine und insbesondere dem beweglichen Maschinenteil oder in dessen Umgebung montiert sein.

Das bewegte Maschinenteil weist bevorzugt einen Greifer auf, und der weitere Sensor bestimmt als Eigenschaft, ob der Greifer geöffnet oder geschlossen ist oder mit welcher Greifkraft ein Werkstück gehalten wird. Dabei kann es sich um einen Greifer mit integriertem weiterem Sensor handeln, der beispielsweise die Greifkraft oder Greiferposition misst, wie ein Magnetsensor für die Kolbenposition in pneumatischen Greifern. Ein offener Greifer trägt kein Werkstück, ein geschlossener in der Regel schon, vor allem wenn noch eine gewisse Greifkraft ausgeübt wird. Es ist sogar denkbar, das Werkstück anhand des aus der erforderlichen Greifkraft oder direkt bestimmten Gewichts zu identifizieren und anhand der Identität aus einer Datenbank weitere Informationen zu dem Werkstück zu gewinnen. Der Greifer kann als Sauggreifer mit entsprechender Saugkraft ausgebildet sein.

Der weitere Sensor ist vorzugsweise ein bildgebender Sensor, und als Eigenschaft wird mittels Bildverarbeitung das Werkzeug und/oder das Werkstück vermessen oder identifiziert. Ein bildgebender Sensor erfasst sehr viele Informationen zur aktuellen Situation, aus denen die für die Anpassung des Schutzmantels maßgebliche Eigenschaft gewonnen werden kann. Für die Objektvermessung und Objekterkennung stehen unzählige an sich bekannte Bildverarbeitungsverfahren zur Verfügung. In einer vorteilhaften Ausprägung wird die Bewegung des Maschinenteils genutzt, um mit dem daran angebrachten weiteren Sensor das Werkzeug und/oder Werkstück aus mehreren Perspektiven aufzunehmen, insbesondere eine 3D-Vermessung vorzunehmen, und dementsprechend den Schutzmantel noch genauer und der Situation angemessen anzupassen.

Der weitere Sensor prüft vorzugsweise den Schutzmantel. Beispielsweise kann ein bildgebender Sensor prüfen, ob längs der Messstrahlen noch Licht insbesondere im Infrarotbereich ausgesandt wird. Damit wird das Sicherheitsniveau der Distanzsensoren beziehungsweise der gesamten Absicherung weiter erhöht.

Der weitere Sensor erkennt das Werkzeug oder Werkstück bevorzugt anhand einer Identitätsmarke, insbesondere einem RFID-Transponder, einem UWB-Tag (Ultra Wide Band), einem Barcode oder einer Magnetcodierung, und die Eigenschaft wird aus der erkannten Identität abgeleitet. Damit werden Werkzeug beziehungsweise Werkstück sehr verlässlich identifiziert. Es kann eine Datenbank vorbereitet werden, in der notwendige Geometrien für jeweils geeignete Schutzmäntel abgelegt sind und auf die lokal oder per Netzwerk gezielt anhand der Identität zugegriffen wird. Die Datenbank kann sowohl helfende Größen und Rechenvorschriften als auch fertigen Ursprungspositionen, Ausrichtungen und gegebenenfalls Abstandsschwellen bereitstellen.

Der Distanzsensor ist bevorzugt ein sicherer Sensor und/oder die Funktionsfähigkeit des Distanzsensors wird zyklisch überprüft und/oder die Abstandswerte mehrerer Distanzsensoren werden zur Erzeugung sicherer Abstandswerte untereinander verglichen. Es werden also sichere Abstandswerte gewonnen. Dabei kann der Distanzsensor schon selbst normgerecht ausgebildet sein. Sicherheit kann auch durch mehrere redundante und/oder diversitär redundante Distanzsensoren beziehungsweise zyklische Funktionstests hergestellt werden, oder es wird auf diesem Weg ein höheres Sicherheitsniveau erreicht.

In vorteilhafter Weiterbildung ist ein Absicherungssystem für eine Maschine mit einem beweglichen Maschinenteil vorgesehen, wobei das Absicherungssystem mindestens einen berührungslosen Distanzsensor sowie eine Steuer- und Auswertungseinheit zum Ausführen eines erfindungsgemäßen Verfahrens aufweist. Dabei ist die Auswertungsfunktionalität vorzugsweise nicht im Sensor selbst implementiert, sondern in einem daran angeschlossenen System wie einer Sicherheitssteuerung oder auch einer nicht sicheren Steuerung oder sonstigen Recheneinheit, die dann durch Redundanz oder Tests abgesichert wird. Die Implementierung außerhalb des Distanzsensors erleichtert die Aktualisierung und Anpassung an andere Anwendungen.

Vorzugsweise ist mindestens ein weiterer Sensor vorgesehen, der in Kommunikationsverbindung mit der Steuer- und Auswertungseinheit steht, um eine Eigenschaft des beweglichen Maschinenteils, eines Werkzeugs am Maschinenteil oder eines mitgeführten oder bearbeiteten Werkstücks zu erfassen und anhand der Eigenschaft den Schutzmantel anzupassen. Mögliche Ausgestaltungen und Verwendungen des weiteren Sensors sowie das Verständnis des Begriffs Werkstück wurden oben schon beschrieben.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Darstellung eines mit einem Schutzmantel abgesicherten Roboterarms;
- Fig. 2: eine Blockdarstellung eines Absicherungssystems mit mindestens einem Distanzsensor;
- Fig. 3a: eine dreidimensionale Darstellung eines inneren und äußeren Schutzmantels;
- Fig. 3b: eine dreidimensionale Darstellung einer ersten Anpassung des Schutzmantels durch Aktivierung des inneren Schutzmantels;
- Fig. 3c: eine dreidimensionale Darstellung einer zweiten Anpassung des Schutzmantels durch Aktivierung des äußeren Schutzmantels;
- Fig. 4a: eine dreidimensionale Darstellung eines Schutzmantels mit kurzen Abstandsschwellen;
- Fig. 4b: eine dreidimensionale Darstellung eines Schutzmantels mit langen Abstandsschwellen; und
- Fig. 5: eine dreidimensionale Darstellung eines Schutzmantels mit individuellen Abstandsschwellen zur Anpassung an eine Werkstückkontur.

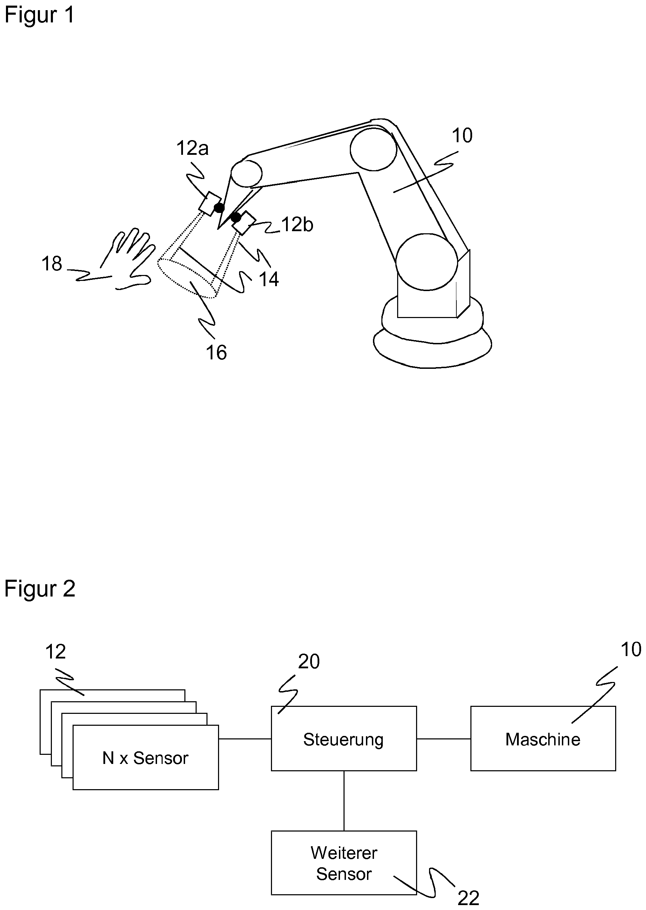

Figur 1 zeigt eine Darstellung eines abzusichernden Roboterarms 10, der mit einer Bedienperson zusammenarbeitet. Der Roboterarm 10 und die spezielle Anwendung sind Beispiele, und die nachfolgenden Erläuterungen sind auf andere abzusichernde bewegte Maschinen und Szenarien übertragbar, insbesondere AGVs/AGCs (Automated Guided Vehicle / Container) oder Drohnen.

Zur Absicherung sind an dem Roboterarm 10 Distanzsensoren 12a-b angebracht, vorzugsweise in der Umgebung eines Werkzeugs zu dessen Absicherung (EOAS, End-of-Arm-Safeguarding). Die Distanzsensoren 12a-b bestimmen mehrere Abstandswerte längs jeweiliger Messstrahlen 14. Dazu eignen sich besonders optoelektronische Abstandssensoren beispielsweise mit Messung der Lichtlaufzeit (ToF, Time of Flight). Die einleitend genannte DE 10 2015 112 656 A1 stellt ein derartiges System vor, auf das ergänzend verwiesen wird. Es gibt aber auch andere optoelektronische Sensoren, um Abstände zu bestimmen, wie Triangulationstaster, Laserscanner und 2D- oder 3D-Kameras, ebenso wie ganz andere Technologien, etwa Ultraschallsensoren, kapazitive Sensoren, Radarsensoren und dergleichen.

Die Messstrahlen 14 bilden gemeinsam einen virtuellen Schutzmantel 16 um das Ende beziehungsweise Werkzeug des Roboterarms 10. Dazu werden während des Betriebs des Roboterarms 10 die von den Distanzsensoren 12a-b gemessenen Abstandswerte mit Abstandsschwellen verglichen. Ist eine Abstandsschwelle unterschritten, so wird das auf den Eingriff eines Körperteils oder sonstigen unzulässigen Objekts 18 zurückgeführt. Dann wird eine sicherheitsgerichtete Reaktion des Roboters 10 ausgelöst, die abhängig von den verletzten Abstandsschwellen in einem Verlangsamen, Ausweichen oder einem Nothalt bestehen kann.

Der Schutzmantel 16 hat im Beispiel der Figur 1 die Geometrie eines Kegelstumpfmantels. Allgemein ist der Schutzmantel 16 eine Fläche, die einen sicherheitsrelevanten Zugangsbereich zu dem Roboterarm 10 beziehungsweise dessen Werkzeugspitze bildet. Im Beispiel des Roboterarms 10 besteht prinzipiell Zugang von allen seitlichen Richtungen, so dass der Schutzmantel 16 dann vorzugsweise eine geschlossene Fläche bildet. Der Schutzmantel 16 ist also vorzugsweise topologisch ein Zylindermantel, der aber aufgrund der Lage der Messstrahlen 14 im Raum verformt sein kann, etwa zu einem Kegelstumpf, einem Pyramidenstumpf oder einem Prisma. In anderen Anwendungen oder Situationen kann es auch Lücken zu bestimmten Seiten geben, von denen aus anderen, insbesondere mechanischen oder baulichen Gründen ein sicherheitsrelevanter Eingriff ausgeschlossen ist. Den unteren Rand des Schutzmantels 16 definieren die Abstandsschwellen.

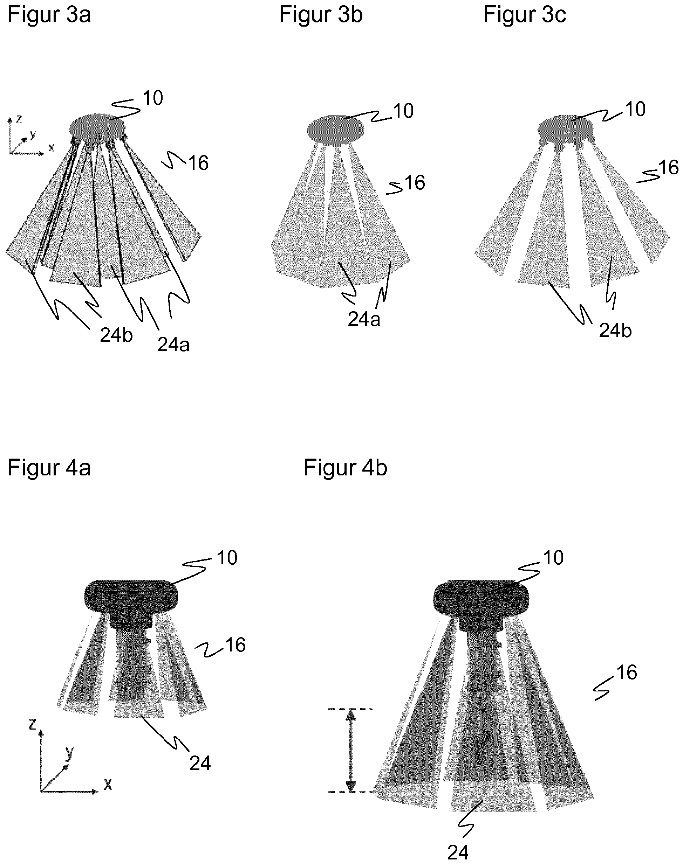

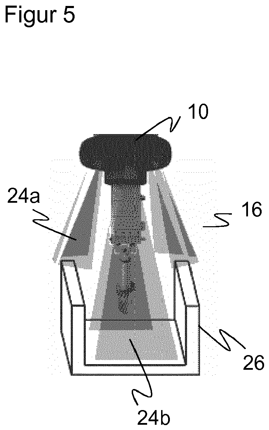

Erfindungsgemäß wird der Schutzmantel 16 angepasst. Dazu kann einerseits die Lage der Messstrahlen 14 im Raum verändert werden. Konkret besteht dazu die Möglichkeit, den Ursprung der Messstrahlen 14 zu verschieben und/oder dessen Ausrichtung zu verschwenken. Dies wird später unter Bezugnahme auf die Figur 3 näher erläutert. Außerdem kann die Länge der Messstrahlen 14 einzeln oder gemeinsam durch Anpassung der Abstandsschwellen verändert werden, worauf unter Bezugnahme auf die Figuren 4 und 5 nochmals eingegangen wird. Wann und in welche neue Geometrie der Schutzmantel 16 anzupassen ist, wird entweder vor dem Betrieb eingelernt oder anhand von Sensordaten situativ entschieden. Hierzu werden in dieser Beschreibung abschließend diverse Anwendungsbeispiele gegeben. Ein vorteilhaftes Vorgehen für das Einlernen ist, bestimmte Positionen des Roboterarms 10 auf dessen Bewegungsbahn als Umschaltpunkte zu nutzen, etwa das Erreichen eines Arbeitspunktes, an dem die eigentliche Arbeitsbewegung mit Annäherung an ein Werkstück beginnt.

Figur 2 zeigt eine Blockdarstellung eines erfindungsgemäßen Absicherungssystems. Ein oder mehrere Distanzsensoren 12 sind wie in Figur 1 gezeigt mit dem abzusichernden Maschinenteil mitbewegt, um es durch den Schutzmantel 16 gegen Eingriffe abzusichern und so Unfälle und Verletzungen zu vermeiden. Bei den Distanzsensoren 12 handelt es sich vorzugsweise um optoelektronische Sensoren nach dem Lichtlaufzeitprinzip insbesondere auf Basis von SPAD-Empfängern (Single-Photon Avalanche Diode), aber auch andere gleichartige oder gemischt verwendete Sensoren aus den oben angeführten Beispielen sind denkbar.

Die Abstandswerte werden an eine Steuerung 20 weitergegeben, die unter anderem für die hier betrachteten Sicherheitsauswertungen zuständig ist und die erforderlichenfalls ein sicheres Signal an die Maschine 10 beziehungsweise deren Steuerung ausgibt, um eine Sicherheitsreaktion auszulösen und beispielsweise die Arbeitsgeschwindigkeit der Maschine 10 anzupassen oder diese anzuhalten. Prinzipiell könnten die Sicherheitsauswertungen auch in einem der Distanzsensoren 12 untergebracht sein, aber die Flexibilität in einer Steuerung 20 ist größer. Außerdem erleichtert die Trennung die Übertragung auf andere Systeme. Die Sicherheitsfunktionalität kann als Hardwarebaustein, Softwarepaket, App oder in jeder sonst geeigneten Form implementiert sein. Die Steuerung 20 ist vorzugsweise eine Sicherheitssteuerung, alternativ kommt aber auch eine andere Hardware in Betracht, wie ein Mikrocontroller, ein Computer, ein PLC (programmable logic controller), die Roboter- oder Maschinensteuerung, eine Edge-Computing-Infrastruktur oder eine Cloud. Auch hinsichtlich der Kommunikationsverbindungen besteht eine große Auswahl, etwa I/O-Link, Bluetooth, WLAN, Wi-Fi, 3G/4G/5G und prinzipiell jeglicher industrietauglicher Standard.

Die Steuerung 20 kann auch Informationen der Maschine 10 empfangen, beispielsweise Positionen eines Roboterarms, um Umschaltpunkte für eine Anpassung des Schutzmantels 16 zu erkennen. Außerdem kann mindestens ein weiterer Sensor 22 angeschlossen sein, aus dessen Sensordaten die Steuerung 20 bestimmt, ob die gegenwärtige Situation eine Anpassung des Schutzmantels 16 erfordert und welche neue Geometrie zu wählen ist.

Die Distanzsensoren 12 und die Steuerung 20 müssen eine sichere Erfassung und Auswertung im Sinne der einschlägigen Normen leisten. Ein Weg dafür ist, dass sichere Sensoren 12, 22 und eine Sicherheitssteuerung eingesetzt werden. Es ist aber auch denkbar, originär nicht sichere Hardware zu verwenden und das geforderte Sicherheitsniveau durch Redundanz, auch diversitäre Redundanz, beziehungsweise Plausibilitätschecks oder zyklische Tests zu erreichen.

Figur 3a zeigt den Schutzmantel 16 an der Spitze des Roboterarms 10 in einem Ausführungsbeispiel, in dem insgesamt acht Distanzsensoren 12 jeweils aus mehreren Messstrahlen 14 einen Sektor 24a-b des Schutzmantels 16 bilden. Jeder Distanzsensor 12 weist dafür eine Reihenanordnung von Sender-/Empfängerpaaren auf, deren jeweilige Messstrahlen 14 in der Form des Sektors 24a-b auseinanderlaufen. Alternativ kann der Sektor 24a-b auch jeweils nur von einem sich verbreiternden Messstrahl 14 erzeugt oder zumindest eine gemeinsame Beleuchtung für eine Empfängerzeile vorgesehen sein.

Die Sektoren 24a-b, oder allgemein die Messstrahlen 14, sind zu zwei oder mehr Ringen angeordnet. Dadurch entstehen effektiv ineinander angeordnete Schutzmäntel 16 unterschiedlicher Größe. Hier bedeutet Größe die Ausdehnung in der X-Y-Richtung gemäß dem in Figur 3a eingezeichneten Koordinatensystem, dessen Z-Richtung die Mittenachse der Messstrahlen 14 und damit im Wesentlichen die Richtung ist, in der die Distanzsensoren 12 Abstände messen.

Um die Geometrie des Schutzmantels 16 anzupassen, besteht nun die Möglichkeit, wahlweise nur den inneren Ring der Sektoren 24a wie in Figur 3b oder nur den äußeren Ring der Sektoren 24b wie in Figur 3c zu aktivieren. Das verändert die Ausrichtung und in geringfügigerem Ausmaß auch den Ursprung der aktiven Messstrahlen 14. Insgesamt wird durch den inneren Ring ein kleinerer Öffnungswinkel des Schutzmantels 16 erzielt als durch den äußeren Ring. Die Lücken zwischen den Sektoren 24a-b können in der Realität auch vermieden werden, beziehungsweise sie sind vorzugsweise kleiner als das geforderte Detektionsvermögen, d.h. beispielsweise bei gefordertem Fingerschutz passt kein Finger durch eine Lücke hindurch.

In Erweiterung dieses Gedankens kann man sich auch vorstellen, dass die Distanzsensoren 12 eine Vielzahl von Messstrahlen 14 erzeugen, die gemeinsam beispielsweise ähnlich einem Facettenauge einen ganzen Raumwinkelbereich um die Werkzeugspitze des Roboterarms 10 beobachten. Die Ursprünge dieser Messstrahlen 14 bilden dann eine Fläche, und durch Auswahl einer beliebigen geschlossenen Kurve auf dieser Fläche lassen sich aktive Messstrahlen 14 selektieren, um eine bestimmte Geometrie des Schutzmantels 16 zu erzeugen. Für eine solche Ausführungsform eigenen sich besonders Matrixempfänger von optischen Distanzsensoren 12. Die Auswahl einer Geometrie entspricht dann besonderen interessierenden Bereichen (ROI, region of interest), aus denen die Messstrahlen 14 für den Schutzmantel 16 rekrutiert werden. Die Besonderheit ist, dass diese ROIs gemeinsam vorzugsweise eine geschlossene Kurve bilden.

Das bisher vorgestellte Konzept zur Anpassung der Geometrie des Schutzmantels 16 basiert folglich darauf, mehr Messstrahlen 14 zur Verfügung zu stellen, als ein Schutzmantel 16 benötigt, und darunter diejenigen auszuwählen, die eine geeignete Geometrie erzeugen. Alternativ oder ergänzend ist auch möglich, die Lage von Messstrahlen 14 im Raum zu manipulieren. Es ist dann mindestens ein Aktor oder Motor vorhanden, der einen Distanzsensor als Ganzes oder einen Teil davon, der mindestens einen Messstrahl 14 erzeugt, verschiebt oder verkippt. Als besonders bevorzugter Spezialfall werden die Messstrahlen 14 gemeinsam nach innen oder außen verschwenkt. Das verändert den Öffnungswinkel des Schutzmantels 16 und erzeugt im Ergebnis dieselbe Variation des Schutzmantels wie eine in den Figuren 3b-c gezeigte selektive Aktivierung von inneren und äußeren Ringen.

Die Figuren 4a-b illustrieren eine weitere mögliche Anpassung des Schutzmantels 16, der nun in Z-Richtung verkürzt oder verlängert wird. Dazu werden die Abstandsschwellen angepasst. Mit kleinen Abstandsschwellen wie in Figur 4a entsteht ein kurzer Schutzmantel 16, mit größeren Abstandsschwellen wie in Figur 4b ein längerer Schutzmantel 16. Beispielsweise sichert der kurze Schutzmantel 16 eine geringe Arbeitsgeschwindigkeit oder eine Situation ab, in welcher sich die Werkzeugspitze des Roboterarms 10 nahe an einem Werkstück befindet, während bei einer größeren Arbeitsgeschwindigkeit im Freiraum der längere Schutzmantel 16 aktiviert wird.

Figur 5 illustriert eine individuelle Anpassung der Abstandsschwellen an eine Umgebungskontur, hier eines Werkstücks 26. Während in Figur 4 die Abstandsschwellen gemeinsam angepasst wurden, gibt es nun Sektoren 24a-b oder auch individuelle Messstrahlen 14 mit unterschiedlichen Abstandsschwellen. Die Kontur des Werkstücks 26 wird vorab eingelernt oder situativ berücksichtigt. Ohne individuelle Anpassung würde das Werkstück 26 entweder eine unnötige Sicherheitsreaktion auslösen oder in Bereichen, in denen die Kontur nicht weit genug nach oben reicht, Schutzlücken lassen.

Es besteht somit in Zusammenfassung der bisherigen Erläuterungen die Möglichkeit, den Schutzmantel 16 durch verschiedenste Veränderungen der Lage von Messstrahlen 14 im Raum in der X-Y-Richtung und/oder durch Veränderung der Abstandsschwellen in der Z-Richtung anzupassen. Dadurch ist bereits eine hohe Flexibilität erreicht, um geeignete Schutzmäntel für verschiedene Anwendungen und Anwendungssituationen einzulernen, beispielsweise an Umschaltpunkten innerhalb des Arbeitsablaufs.

Eine noch größere Flexibilität lässt sich dadurch erreichen, dass mindestens ein weiterer Sensor 22 die aktuelle Situation erfasst, um den Schutzmantel 16 auf Basis der Sensordaten sogar dynamisch anzupassen. Der weitere Sensor 22 kann Teil des Absicherungssystems sein, alternativ hat er auch noch andere Aufgaben oder gehört eigentlich zu einem anderen System. Ebenso kann der weitere Sensor 22 wie die Distanzsensoren 12 an dem Roboterarm 10 oder alternativ in dessen Umgebung montiert sein.

Eine intelligente und situationsgerechte Anpassung des Schutzmantels 16 garantiert stets die Sicherheitsfunktion und wählt zugleich den Schutzmantel 16 in allen Richtungen so klein wie möglich. Dazu im Gegensatz mussten bisher worst-case-Szenarien abgebildet werden, die zu unnötig großen Schutzmänteln 16 führen, mit zahlreichen unerwünschten Konsequenzen wie zu frühes Abschalten oder Verlangsamen des Roboterarms 10, überflüssige Umschaltprozesse beim Annähern oder Nichterreichbarkeit bestimmter Positionen. Deshalb erhöhen angepasste Schutzmäntel 16 die Einsetzbarkeit und Produktivität.

Ein erstes Beispiel für den weiteren Sensor 22 sind Sensoren des Roboterarms 10 selbst. So erfordert eine höhere Robotergeschwindigkeit je nach Bewegungsrichtung längere Abstandsschwellen und/oder größere Durchmesser beziehungsweise Öffnungswinkel des Schutzmantels 16. Aus internen Strommessungen an den Gelenken des Roboterarms können Rückschlüsse auf die aktuelle Traglast des Roboters gezogen und damit auch auf das davon bewegte Werkzeug und Werkstück geschlossen werden. Zum einen geht von einer größeren Last ein größeres Gefährdungspotential aus, das größere Schutzmäntel 16 erfordert. Zum anderen kann aus dem Gewicht das Werkzeug oder beförderte Werkstück auch identifiziert werden.

Es ist, nicht nur im Beispiel einer Erfassung des Gewichts, keineswegs erforderlich, ein Werkzeug oder Werkstück allein aus der Sensorfunktion zu identifizieren und daraus eigenständig die notwendige Geometrie des Schutzmantels 16 abzuleiten. Vielmehr kann dies durch Datenbanken erheblich unterstützt werden, insbesondere auch über einen Fernzugriff beispielsweise per Cloud. Diese Datenbank enthält beispielsweise Datensätze zu möglichen Werkzeugen oder Werkstücken, die bereits aus wenigen Eigenschaften wie dem Gewicht eine Auswahl und damit Identifizierung ermöglichen. Damit können dann aus dem Datensatz weitere Informationen abgerufen werden, wie die vollständigen Abmessungen. Dazu ist sogar der Zugriff auf eine Webseite des Herstellers denkbar.

Mit umfassenden Informationen zu Werkzeug oder Werkstück hat die Steuerung 20 die Möglichkeit, die Geometrie des Schutzmantels 16 zu berechnen. Alternativ kann die erforderliche Rechenvorschrift oder die teilweise oder vollständige Geometrie samt zu aktivierenden oder bewegenden Messstrahlen 14 und Abstandschwellen Teil des Datensatzes sein. Umgekehrt können einmal eingelernte Geometrien und zugehörige Größen zu bestimmten Werkzeugen, Werkstücken und dergleichen auch in der Datenbank abgelegt werden, um sie zu erweitern und für spätere Verwendung auch anderer Absicherungssysteme verfügbar zu machen.

Zurück zu den Beispielen für einen weiteren Sensor 22, ist als ein Werkzeug ein Backen-, Finger- oder Sauggreifer möglich. Dabei erkennt beispielsweise ein magnetischer Zylindersensor die Kolbenposition in pneumatischen Greifern, insbesondere ob der Greifer offen oder geschlossen ist und somit ein Werkstück vorhanden ist oder nicht. Die exakte Greiferstellung gibt Auskunft über zumindest eine Dimension des Werkstücks. Eine integrierte Greifkraftmessung erlaubt Rückschlüsse auf das Gewicht des Werkstücks, entsprechendes gilt für die von einem Sauggreifer ausgeübte Saugkraft. In allen diesen Fällen erfasst der weitere Sensor 22 mindestens eine Eigenschaft, die dann über Datenbankzugriff ergänzt und abgeglichen werden kann, um situativ eine geeignete Geometrie des Schutzmantels 16 zu finden.

Als weiteres Beispiel für den weiteren Sensor sind bildgebende oder Vision-Systeme zu nennen, also insbesondere 2D- oder 3D-Kameras. Derartige Vision-Systeme sind häufig ohnehin vorhanden, damit der Roboterarm seine Anwendung lösen und beispielsweise ein Werkstück richtig greifen kann. Sie lassen sich aber auch zusätzlich nutzen, um den Schutzmantel 16 anzupassen. Befinden sich Werkzeug und/oder Werkstück zumindest teilweise im Sichtfeld, so ist eine Identifizierung anhand von Form, Farbe oder Kontur gegebenenfalls mit Ergänzung aus einem Datenbankzugriff möglich.

Es ist aber nicht zwingend erforderlich, dass das Vision-System ein Objekt wiedererkennt, an das der Schutzmantel 16 angepasst werden soll. Es ist auch ein selbständiges Einlernen vorstellbar, bei dem neue Umgebungen und insbesondere Veränderungen in der Umgebung erkannt werden und daraufhin ein Einlernen stattfindet. Damit klar ist, dass die Veränderung gewollt und kein sicherheitskritisches Ereignis ist, kann eine spezielle Nutzereingabe gefordert werden, die auch die Form eines optischen Markers eines neu eingebrachten Objekts annehmen kann. Außerdem muss durch das Absicherungssystem, ein externes Sicherheitssystem oder eine Verwaltungsmaßnahme gesichert sein, dass sich kein Mensch oder Körperteil im Gefahrenbereich befindet.

Ein Vision-System als weiterer Sensor 22 kann noch eine ganz andere nützliche Funktion erfüllen, nämlich eine sicherheitsgerichtete Systemprüfung des Absicherungssystems. Beispielsweise erfasst ein Vision-System mit Empfindlichkeit im Infrarotbereich die Messstrahlen 14 der Distanzsensoren 12. Dadurch ist eine diversitäre Überprüfung möglich, ob ein Messstrahl 14 ausgefallen oder falsch getriggert ist. Aus Lage und Größe der im Vision-System erfassten Lichtflecke der Distanzsensoren 12 kann auch auf Fehlstellungen geschlossen und die Geometrie des Schutzmantels 16 geprüft werden. Umgekehrt ist aber auch denkbar, das Zeitverhalten von Vision-System und Distanzsensoren so abzustimmen, dass sie gerade nicht gleichzeitig aktiv sind, damit sie sich nicht gegenseitig stören, oder nochmals alternativ zu gewissen Zeiten eine Überprüfung mit gleichzeitiger Aktivität vorzunehmen und zu anderen Zeiten durch jeweils nur ein aktives System einander auszuweichen.

Als noch ein weiteres Beispiel für einen weiteren Sensor 22 eignen sich Ident-Sensoren. Das sind unter anderem RFID-Leser oder optische Codeleser, aber auch beispielsweise UWB-Sensoren (Ultra Wide Band) oder Magnetidentifikationssensoren. Das Werkzeug oder Werkstück ist in diesem Fall mit einem passenden RFID-Transponder, Barcode, 2D-Code oder Magnetcode versehen. Es wurde oben schon erläutert, wie die Identität eines Werkzeugs oder Werkstücks auf diverse Arten genutzt werden kann, um eine Geometrie des angepassten Schutzmantels 16 zu bestimmen, vorzugsweise mit Unterstützung einer Datenbank. Mit einigen Ident-Sensoren, insbesondere einem optischen Codeleser oder einem Magnetsensor in Kombination mit einem Magnetstreifen, lassen sich auch Positionen sehr genau erfassen, wenn bekannt ist, wo auf dem Werkzeug oder Werkstück der Code angebracht ist. Das kann die Programmierung des Roboterarms 10 vereinfachen.

Ergänzend seien als weitere Sensoren 22 noch solche genannt, die sich zur Fernfeldüberwachung eigenen, wie sichere Laserscanner, 3D-Kameras, Druckmatten und dergleichen. Solche weiteren Sensoren 22 dienen nicht unmittelbar der Anpassung der Geometrie des Schutzmantels 16, können aber unter Umständen in Doppelfunktion dafür genutzt werden. Die primäre Funktion dieser weiteren Sensoren ist eine generelle Überwachung des Roboterarms 10, mit der bei Detektion eines Werkers die Anwendung überhaupt erst in einen MRK-fähigen Betriebszustand versetzt und dabei unter anderem das Absicherungssystem aktiviert wird. Außerdem können anhand der Erfassungen dieser weiteren Sensoren beispielsweise Maximalgeschwindigkeit, Maximalkraft, erlaubte Bewegungsbereiche und ähnliches festgelegt werden.

Prinzipiell können die hier aufgelisteten Beispiele und Verfahren beliebig kombiniert werden, um die Sicherheit des Systems bei maximaler Flexibilität und Verfügbarkeit zu gewährleisten.

## Patentansprüche

1. Verfahren zum Absichern eines beweglichen Maschinenteils einer Maschine (10), insbesondere eines Roboterarms, wobei zumindest ein Teil des beweglichen Maschinenteils von einem Schutzmantel (16) abgesichert wird, d.h. einer Fläche, die einen sicherheitsrelevanten Zugangsbereich zu dem beweglichen Maschinenteil bildet, indem bei Eingriff eines Objekts (18) in den Schutzmantel (16) eine sicherheitsgerichtete Reaktion der Maschine (10) eingeleitet wird, wobei der Schutzmantel (16) von mindestens einem mit dem Maschinenteil mitbewegten berührungslosen Distanzsensor (12) aufgespannt wird, der mit mehreren Messstrahlen (14) mehrere Abstandswerte misst, und wobei die Geometrie des Schutzmantels (16) durch Ursprung und Ausrichtung der Messstrahlen (14) sowie Abstandsschwellen für die jeweiligen Messstrahlen (14) bestimmt ist, **dadurch gekennzeichnet,**
**dass** der Schutzmantel (16) durch Veränderung von Ursprung und/oder Ausrichtung der Messstrahlen (14) angepasst wird, indem andere Messstrahlen (14) aktiviert werden und/oder mindestens ein Distanzsensor (12) als Ganzes oder ein Teil davon, der mindestens einen Messstrahl (14) erzeugt, bezüglich eines mit dem Maschinenteil mitbewegten Bezugssystems quer bewegt oder verschwenkt wird.

2. Verfahren nach Anspruch 1,
wobei der Schutzmantel (16) die Geometrie eines Zylinders, Kegelstumpfes, Prismas oder Pyramidenstumpfes aufweist.

3. Verfahren nach Anspruch 1 oder 2,
wobei der Öffnungswinkel und/oder der Durchmesser des Schutzmantels (16) verändert wird.

4. Verfahren nach einem der vorhergehenden Ansprüche,
wobei der Schutzmantel (16) aus mehreren Sektoren (24) je eines von mehreren Distanzsensoren (12) mit einer Reihe von Messstrahlen (14) aufgespannt wird.

5. Verfahren nach einem der vorhergehenden Ansprüche,
wobei andere Messstrahlen (14) durch Wahl eines interessierenden Bereichs des Distanzsensors (12) aktiviert werden.

6. Verfahren nach einem der vorhergehenden Ansprüche,
wobei die Ursprünge der Messstrahlen (16) mindestens zwei partielle oder vollständige Ringe oder Vielecke bilden, die selektiv aktiviert werden.

7. Verfahren nach einem der vorhergehenden Ansprüche,
wobei der Schutzmantel (16) zumindest in Teilbereichen durch Veränderung der Abstandsschwellen angepasst wird.

8. Verfahren nach einem der vorhergehenden Ansprüche,
wobei mit mindestens einem weiteren Sensor (22) eine Eigenschaft des beweglichen Maschinenteils (10), eines Werkzeugs am Maschinenteil (10) oder eines mitgeführten oder bearbeiteten Werkstücks oder dessen Umgebung erfasst wird, und wobei der Schutzmantel (16) anhand der erfassten Eigenschaft angepasst wird.

9. Verfahren nach Anspruch 8,
wobei das bewegte Maschinenteil (10) einen Greifer aufweist und der weitere Sensor (22) als Eigenschaft bestimmt, ob der Greifer geöffnet oder geschlossen ist oder mit welcher Greifkraft ein Werkstück gehalten wird.

10. Verfahren nach Anspruch 8 oder 9,
wobei der weitere Sensor (22) ein bildgebender Sensor ist und als Eigenschaft mittels Bildverarbeitung das Werkzeug und/oder das Werkstück vermessen oder identifiziert wird, wobei insbesondere der weitere Sensor (22) den Schutzmantel (16) prüft.

11. Verfahren nach einem der Ansprüche 8 bis 10,
wobei der weitere Sensor (22) das Werkzeug oder Werkstück anhand einer Identitätsmarke erkennt, insbesondere einem RFID-Transponder, einem UWB-Tag, einem Barcode oder einer Magnetcodierung, und die Eigenschaft aus der erkannten Identität ableitet.

12. Verfahren nach einem der vorhergehenden Ansprüche,
wobei der Distanzsensor (12) ein sicherer Sensor ist und/oder wobei die Funktionsfähigkeit des Distanzsensors (12) zyklisch überprüft wird und/oder wobei die Abstandswerte mehrerer Distanzsensoren (12) zur Erzeugung sicherer Abstandswerte untereinander verglichen werden.

13. Absicherungssystem (12, 20) für eine Maschine (10) mit einem beweglichen Maschinenteil, wobei das Absicherungssystem (12, 20) mindestens einen an dem beweglichen Maschinenteil montierten berührungslosen Distanzsensor (12) sowie eine Steuer- und Auswertungseinheit (20) zum Ausführen eines Verfahrens nach einem der vorhergehenden Ansprüche aufweist.

14. Absicherungssystem nach Anspruch 13,
wobei mindestens ein weiterer Sensor (22) vorgesehen ist, der in Kommunikationsverbindung mit der Steuer- und Auswertungseinheit (20) steht, um eine Eigenschaft des beweglichen Maschinenteils, eines Werkzeugs am Maschinenteil oder eines mitgeführten oder bearbeiteten Werkstücks zu erfassen und anhand der Eigenschaft den Schutzmantel (16) anzupassen.

## Claims

1. A method for safeguarding a movable machine part of a machine (10), in particular a robot arm, wherein at least a part of the movable machine part is safeguarded by a protective mantle (16), i.e. a surface that forms a safety-relevant access area to the movable machine part, in that, when an object (18) enters the protective mantle (16), a safety-related reaction of the machine (10) is initiated, the protective mantle (16) being generated by at least one non-contact distance sensor (12) that is moved along with the machine part and that measures a plurality of distance values by means of a plurality of measuring beams (14), and wherein the geometry of the protective mantle (16) is determined by the origin and orientation of the measuring beams (14) as well as distance thresholds for the respective measuring beams (14),
**characterized in that** the protective mantle (16) is adapted by changing the origin and/or orientation of the measuring beams (14) by activating other measuring beams (14) and/or by transversely moving or pivoting at least one distance sensor (12) as a whole or a part thereof, that generates at least one measuring beam (14), with respect to a reference system moved along with the machine part.

2. The method according to claim 1,
wherein the protective mantle (16) has the geometry of a cylinder, truncated cone, prism or truncated pyramid.

3. The method according to claim 1 or 2,
wherein the opening angle and/or the diameter of the protective mantle (16) is changed.

4. The method according to any of the preceding claims,
wherein the protective mantle (16) is generated by a plurality of sectors (24) each of one of a plurality of distance sensors (12) having a row of measuring beams (14).

5. The method according to any of the preceding claims,
wherein other measuring beams (14) are activated by selecting a region of interest of the distance sensor (12).

6. The method according to any of the preceding claims,
wherein the origins of the measuring beams (14) form at least two partial or complete rings or polygons which are selectively activated.

7. The method according to any of the preceding claims,
wherein the protective mantle (16) is adapted at least in partial regions by changing the distance thresholds.

8. The method according to any of the preceding claims,
wherein a property of the movable machine part (10), of a tool on the machine part (10) or of a workpiece being carried or machined or its surrounding is detected by at least one additional sensor (22), and wherein the protective mantle (16) is adapted on the basis of the detected property.

9. The method according to claim 8,
wherein the moving machine part (10) comprises a gripper and the additional sensor (22) determines, as the property, whether the gripper is open or closed or with which gripping force a workpiece is held.

10. The method according to claim 8 or 9,
wherein the additional sensor (22) is an imaging sensor and, as the property, the tool and/or the workpiece is measured or identified by means of image processing, wherein in particular the additional sensor (22) checks the protective mantle (16).

11. The method according to any of claims 8 to 10,
wherein the additional sensor (22) detects the tool or workpiece by means of an identity tag, in particular an RFID transponder, a UWB tag, a barcode or a magnetic code, and derives the property from the detected identity.

12. The method according to any of the preceding claims,
wherein the distance sensor (12) is a safe sensor and/or wherein the operability of the distance sensor (12) is cyclically checked and/or wherein the distance values of a plurality of distance sensors (12) are compared with each other to generate safe distance values.

13. A safeguarding system (12, 20) for a machine (10) having a movable machine part, the safeguarding system (12, 20) comprising at least one non-contact distance sensor (12) mounted on the movable machine part and a control and evaluation unit (20) for carrying out a method according to any of the preceding claims.

14. The safeguarding system according to claim 13,
wherein at least one additional sensor (22) is provided, which is in communication connection with the control and evaluation unit (20) in order to detect a property of the movable machine part, of a tool on the machine part or of a workpiece being carried or machined or its surrounding and to adapt the protective mantle (16) on the basis of the property.

## Revendications

1. Procédé de sécurisation d'une partie mobile d'une machine (10), en particulier d'un bras de robot, dans lequel au moins une portion de la partie mobile de la machine est sécurisée par une enveloppe de protection (16), c'est-à-dire par une surface qui constitue une zone d'accès de sécurité à la partie mobile de la machine, du fait qu'une réaction de sécurité de la machine (10) est déclenchée lorsqu'un objet (18) pénètre dans l'enveloppe de protection (16), l'enveloppe de protection (16) est définie par au moins un capteur de distance sans contact (12) qui est déplacé avec la partie de la machine et qui mesure plusieurs valeurs de distance avec plusieurs faisceaux de mesure (14), et la géométrie de l'enveloppe de protection (16) est déterminée par l'origine et l'orientation des faisceaux de mesure (14) et par des seuils de distance pour les faisceaux de mesure respectifs (14),
**caractérisé en ce que**
l'enveloppe de protection (16) est adaptée par modification de l'origine et/ou de l'orientation des faisceaux de mesure (14) du fait que d'autres faisceaux de mesure (14) sont activés et/ou au moins un capteur de distance (12), dans son ensemble ou une partie de celui-ci, générant au moins un faisceau de mesure (14), est déplacé ou pivoté transversalement par rapport à un système de référence déplacé avec la partie de la machine.

2. Procédé selon la revendication 1,
dans lequel l'enveloppe de protection (16) présente la géométrie d'un cylindre, d'un cône tronqué, d'un prisme ou d'une pyramide tronquée.

3. Procédé selon la revendication 1 ou 2,
dans lequel l'angle d'ouverture et/ou le diamètre de l'enveloppe de protection (16) est modifié.

4. Procédé selon l'une des revendications précédentes,
dans lequel l'enveloppe de protection (16) est définie par plusieurs secteurs (24) d'un capteur de distance respectif parmi plusieurs capteurs de distance (12) avec une série de faisceaux de mesure (14).

5. Procédé selon l'une des revendications précédentes,
dans lequel d'autres faisceaux de mesure (14) sont activés par sélection d'une zone d'intérêt du capteur de distance (12).

6. Procédé selon l'une des revendications précédentes,
dans lequel les origines des faisceaux de mesure (16) forment au moins deux anneaux ou polygones partiels ou complets qui sont activés de manière sélective.

7. Procédé selon l'une des revendications précédentes,
dans lequel l'enveloppe de protection (16) est adaptée au moins dans des zones partielles par modification des seuils de distance.

8. Procédé selon l'une des revendications précédentes,
dans lequel une propriété de la partie de machine mobile (10), d'un outil sur la partie de machine (10) ou d'une pièce à œuvrer embarquée ou usinée ou de son environnement est détectée avec au moins un autre capteur (22), et l'enveloppe de protection (16) est adaptée sur la base de la propriété détectée.

9. Procédé selon la revendication 8,
dans lequel la partie de machine mobile (10) comprend un préhenseur, et l'autre capteur (22) détermine comme propriété l'état ouvert ou fermé du préhenseur ou la force de préhension avec laquelle une pièce à œuvrer est maintenue.

10. Procédé selon la revendication 8 ou 9,
dans lequel l'autre capteur (22) est un capteur d'imagerie et, en tant que propriété, l'outil et/ou la pièce à œuvrer est mesuré(e) ou identifié(e) au moyen d'un traitement d'image, et en particulier, l'autre capteur (22) inspecte l'enveloppe de protection (16).

11. Procédé selon l'une des revendications 8 à 10,
dans lequel l'autre capteur (22) reconnaît l'outil ou la pièce à œuvrer sur la base d'une étiquette d'identité, en particulier d'un transpondeur RFID, d'une étiquette UWB, d'un code à barres ou d'un codage magnétique, et déduit la propriété de l'identité détectée.

12. Procédé selon l'une des revendications précédentes,
dans lequel le capteur de distance (12) est un capteur sûr, et/ou l'aptitude au fonctionnement du capteur de distance (12) est vérifiée de manière cyclique, et/ou les valeurs de distance de plusieurs capteurs de distance (12) sont comparées les unes aux autres pour générer des valeurs de distance sûres.

13. Système de sécurisation (12, 20) pour une machine (10) comportant une partie de machine mobile, le système de sécurisation (12, 20) comportant au moins un capteur de distance sans contact (12) monté sur la partie de machine mobile et une unité de commande et d'évaluation (20) pour mettre en oeuvre d'un procédé selon l'une des revendications précédentes.

14. Système de sécurisation selon la revendication 13,
dans lequel il est prévu au moins un autre capteur (22) qui est en communication avec l'unité de commande et d'évaluation (20), afin de détecter une propriété de la partie de machine mobile, d'un outil sur la partie de machine ou d'une pièce à œuvrer embarquée ou usinée, et d'adapter l'enveloppe de protection (16) sur la base de ladite propriété.
